# EUROPEAN PATENT APPLICATION

(11) **EP 2 641 680 A1**
(43) Date of publication of application: **25.09.2013**
(21) Application number: 11842405.0
(22) Date of filing: 11.11.2011
(51) Int. Cl.: B23B 39/24, B23B 35/00, B23Q 15/00, G05B 19/4093

(54) **HOLE DRILLING DEVICE, AND METHOD**

(30) Priority: 17.11.2010 JP 2010257290
(71) Applicant: Mitsubishi Heavy Industries, Ltd., Tokyo 108-8215 (JP)
(72) Inventor: SASAKI, Yuichi, Minato-ku, Tokyo 108-8215 (JP); KASUBATA, Yoshitake, Minato-ku, Tokyo 108-8215 (JP)
(74) Representative: Intès, Didier Gérard André
(86) International application number: PCT/JP2011/076075
(87) International publication number: WO 2012/067039

(57) **Abstract**

A hole drilling device and method include a drilling head (61), a plurality of hole drilling tools (63) detachably attached to the drilling head (61), a driving device (64) for allowing the drilling head (61) to move in the radial direction and axial direction of attachment holes (60) to be formed on a tube sheet (45), and a control device (65) for driving the driving device (64). The hole drilling tools (63) are disposed, in relation to the drilling head (61), along the arrangement direction of the attachment holes (60) and at an equal interval from one another, said interval being an integer multiple equal to or greater than double the pitch of the attachment holes (60); and the control device (65) drives the driving device (64) such that holes are drilled by means of the hole drilling tools (63) as the drilling head (61) moves with respect to each pitch of the attachment holes (60) in the arrangement direction of the hole drilling tools (63). As a consequence, it is possible to simultaneously drill a plurality of holes at once and to improve the performance of the drilling operation.

## Description

### Field

The present invention relates to a hole drilling device and a hole drilling method that form holes in a tube supporting plate, a tube sheet, or the like to support heat transfer tubes in a steam generator used as a heat exchanger in a nuclear power plant. Background

For example, a pressurized water reactor (PWR) forms high temperature and pressure water not boiling over the entire reactor core by using light water as both a nuclear reactor cooling material and a neutron moderator, sends this high temperature and pressure water to a steam generator to generate steam by heat exchange, and sends this steam to a turbine generator to generate electricity. Further, this pressurized water reactor transfers the heat of high temperature and pressure primary cooling water to secondary cooling water by the steam generator, and generates steam with the secondary cooling water. This steam generator allows the primary cooling water to flow through a plurality of thin heat transfer tubes, generates steam by transferring heat to the secondary cooling water that flows outside, and generates electricity by driving a turbine with this steam.

In this steam generator, a tube group outer cylinder is provided in a closed hollow body at a predetermined gap from the inner wall surface of the body, a plurality of heat transfer tubes having an inverted U shape are provided in the tube group outer cylinder, end portions of the respective heat transfer tubes are supported by a tube sheet, and an inlet-side water chamber and an outlet-side water chamber for the primary cooling water are formed at the lower end portion of the body. Further, an inlet portion for the secondary cooling water is formed so as to be positioned in the body above the tube group outer cylinder, a gas-water separator and a moisture separator are provided so as to be lined in a vertical direction, and a steam outlet is formed above the gas-water separator and the moisture separator.

Accordingly, the primary cooling water is supplied to the plurality of heat transfer tubes from a cooling water pipe through the inlet-side water chamber, and the secondary cooling water is supplied into the body from the inlet portion. Then, heat is exchanged between the primary cooling water (hot water) that flows through the plurality of heat transfer tubes and the secondary cooling water (cold water) that circulates in the body, so that the secondary cooling water absorbs the heat. As a result, steam is generated. Moreover, the generated steam, from which water has been removed by the gas-water separator and moisture has been removed by the moisture separator, is discharged from the steam outlet, and the primary cooling water having completed heat exchange is discharged from the outlet-side water chamber.

In this steam generator, the plurality of heat transfer tubes provided in the body are supported by a plurality of tube supporting plates and the tube sheet. The heat transfer tubes are inserted into a plurality of holes that are formed in the tube supporting plates and the tube sheet, so that the plurality of the heat transfer tubes are supported without vibrating. In this case, since the tube supporting plates and the tube sheet have the plurality of holes, the holes need to be effectively formed by cutting.

### Citation List

### Patent Literature

Patent Literature 1: Japanese Laid-open Patent Publication No. 61-275907 Summary

### Technical Problem

Since the holes, which are formed in the tube supporting plates and the tube sheet, need to support the plurality of heat transfer tubes so that the plurality of heat transfer tubes are close to each other, a gap between the adjacent holes is small. For this reason, it is difficult to simultaneously drill the plurality of holes by cutting tools such as drills. Further, each of the tube supporting plates is supported by a plurality of stay rods, and lower end portions of the stay rods are fixed to the tube sheet by being screwed to the tube sheet. In this case, not only holes to which the plurality of heat transfer tubes are fitted and supported but also screw holes to which the plurality of stay rods are fixed need to be formed in the tube sheet. Even in this regard, it is difficult to simultaneously drill only a plurality of holes, which support the heat transfer tubes, by cutting tools. Meanwhile, the above-mentioned Patent Literature 1 discloses a hole position specifying method of specifying holes that need to be drilled and holes that do not need to be drilled, but does not disclose a method of drilling only a plurality of necessary holes.

The invention has been made to solve the above-mentioned problems, and an object of the invention is to provide a hole drilling device and a hole drilling method that can simultaneously drill a plurality of holes at once and improve the performance of a drilling operation.

### Solution to Problem

According to an aspect of the present invention, a hole drilling device includes: a drilling head; a driving device that allows the drilling head to move in the radial direction and axial direction of holes to be formed on a member to be drilled; a plurality of hole drilling tools that are provided on the drilling head along the arrangement direction of the holes at a regular interval corresponding to an integer multiple equal to or greater than double the pitch of the holes; and a control device that controls the driving device so that the drilling head moves with respect to each pitch of the holes in the arrangement direction of the hole drilling tools and drills holes by the hole drilling tools.

Accordingly, the plurality of hole drilling tools are attached to the drilling head, and the drilling head moves with respect to each pitch of the holes formed in the arrangement direction of the hole drilling tools and can simultaneously drill a plurality of holes by the hole drilling tools. Therefore, it is possible to simultaneously drill a plurality of holes at once. As a result, it is possible to improve the performance of a drilling operation.

Advantageously, in the hole drilling device, the control device drives the driving device so that the drilling head is moved in a direction orthogonal to the arrangement direction of the hole drilling tools by the pitch of the holes and holes are drilled in an adjacent group of one line by the hole drilling tools after the drilling head is moved by a distance corresponding to a group of one line obtained from the multiplication of the pitch of the holes, the integer multiple, and the number of the hole drilling tools and holes are completely drilled by the hole drilling tools.

Accordingly, the plurality of hole drilling tools can be attached to the drilling head and the plurality of hole drilling tools are moved, so that holes are drilled with a group of one line as a unit. Therefore, it is possible to easily drill a plurality of holes in a short time.

Advantageously, in the hole drilling device, the control device drives the driving device so that the drilling head is moved to the next drilling position without drilling holes by all the hole drilling tools when at least one of the plurality of hole drilling tools reaches a drilling-unnecessary position.

Accordingly, it is possible to perform a continuous drilling operation without stopping a machine by drilling the hole, which is positioned at the drilling position set to a drilling-unnecessary position, later.

Advantageously, in the hole drilling device, the control device drives the driving device so that holes are drilled after the hole drilling tool positioned at a drilling-unnecessary position is removed when any one of the plurality of hole drilling tools reaches the drilling-unnecessary position.

Accordingly, since holes are drilled after the hole drilling tool positioned at the drilling-unnecessary position is removed, the drilling of holes is sequentially performed at the drilling positions except for the drilling-unnecessary position. Therefore, it is possible to efficiently perform a drilling operation.

Advantageously, in the hole drilling device, the control device drives the driving device so that holes are drilled with a reduced number of hole drilling tools after holes are drilled by a predetermined number of the hole drilling tools.

Accordingly, it is possible to efficiently drill holes by drilling holes with the reduction in the number of the hole drilling tools after sequentially performing processing in the regions where holes can be drilled with the number of the hole drilling tools and drilling holes in all the ranges where holes may be drilled with the number of the tools.

Advantageously, in the hole drilling device, the member to be drilled has the shape of a disc and holes are drilled on the member to be drilled in an axial direction by the hole drilling tools, and the control device drives the driving device so that the drilling head is moved in the outer circumferential direction of the member to be drilled and drills holes by the hole drilling tools with a group of one line of the holes along a direction parallel to the radial direction of the member to be drilled as a unit.

Accordingly, when the member to be drilled has the shape of a disc, it is possible to simultaneously drill a plurality of holes at once, regardless of the shape of the member to be drilled, by moving the drilling head in the outer circumferential direction of the member to be drilled and drilling holes with a group of one line of the holes along the radial direction of the member to be drilled as a unit. As a result, it is possible to improve the performance of a drilling operation.

According to another aspect of the present invention, in a hole drilling method of moving a drilling head on which a plurality of hole drilling tools are provided in series at a predetermined interval and drilling holes on a member to be drilled, the plurality of hole drilling tools are disposed along the arrangement direction of the holes at a regular interval that corresponds to an integer multiple equal to or greater than double the pitch of the holes, and the drilling head moves with respect to each pitch of the holes in the arrangement direction of the hole drilling tools and drills holes by the hole drilling tools.

Accordingly, since it is possible to simultaneously drill a plurality of holes at once, it is possible to improve the performance of a drilling operation.

### Advantageous Effects of Invention

According to a hole drilling device and a hole drilling method of the invention, the drilling head moves with respect to each pitch of the holes in the arrangement direction of the hole drilling tools and drills holes by the hole drilling tools. Accordingly, it is possible to simultaneously drill a plurality of holes at once, so that it is possible to improve the performance of a drilling operation.

### Brief Description of Drawings

FIG. 1 is a front view illustrating a hole drilling device according to a first embodiment of the invention.
FIG. 2 is a schematic view illustrating regions that are divided by a hole drilling method of the first embodiment.
FIG. 3-1 is a schematic view illustrating a procedure of the hole drilling method of the first embodiment.
FIG. 3-2 is a schematic view illustrating the procedure of the hole drilling method of the first embodiment.
FIG. 3-3 is a schematic view illustrating the procedure of the hole drilling method of the first embodiment.

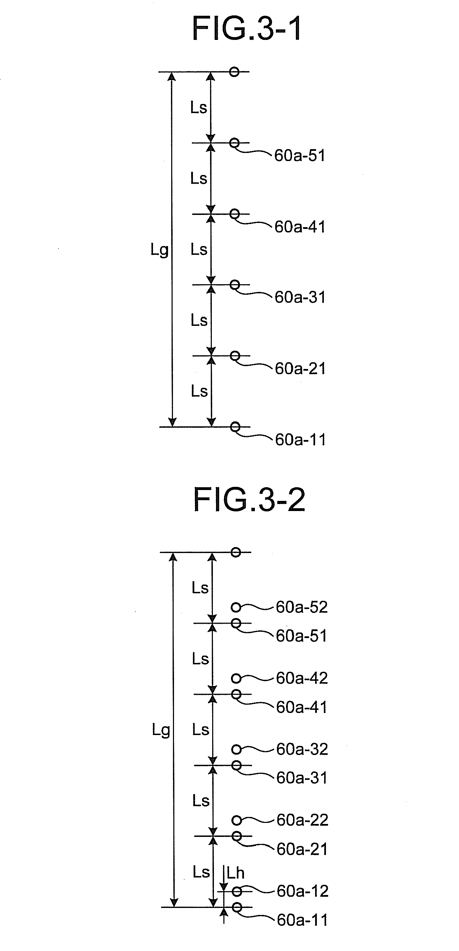

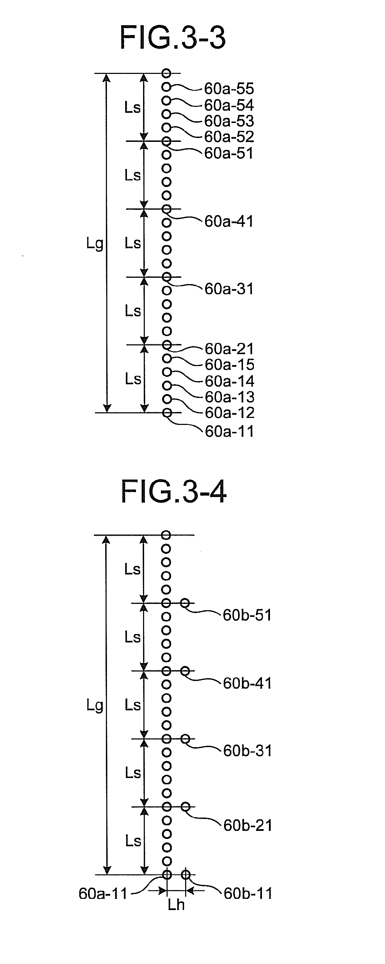

FIG. 3-4 is a schematic view illustrating the procedure of the hole drilling method of the first embodiment.

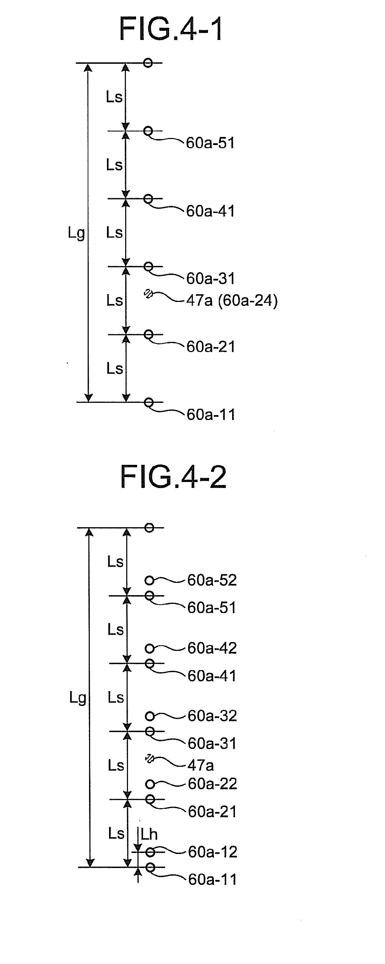

FIG. 4-1 is a schematic view illustrating a procedure of another hole drilling method of the first embodiment.
FIG. 4-2 is a schematic view illustrating the procedure of another hole drilling method of the first embodiment.

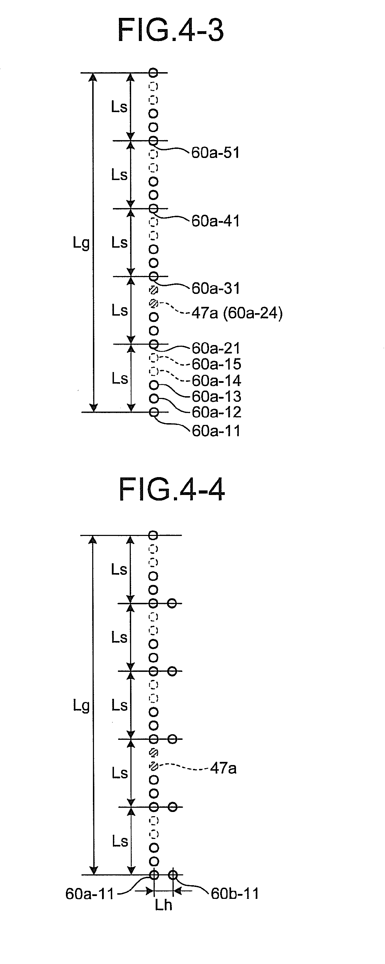

FIG. 4-3 is a schematic view illustrating the procedure of another hole drilling method of the first embodiment.
FIG. 4-4 is a schematic view illustrating the procedure of another hole drilling method of the first embodiment.

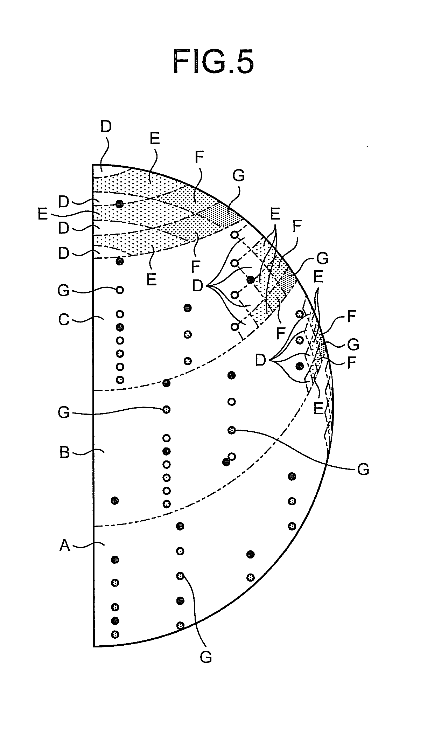

FIG. 5 is a schematic view illustrating the state of a tube sheet that is formed by the hole drilling method of the first embodiment.

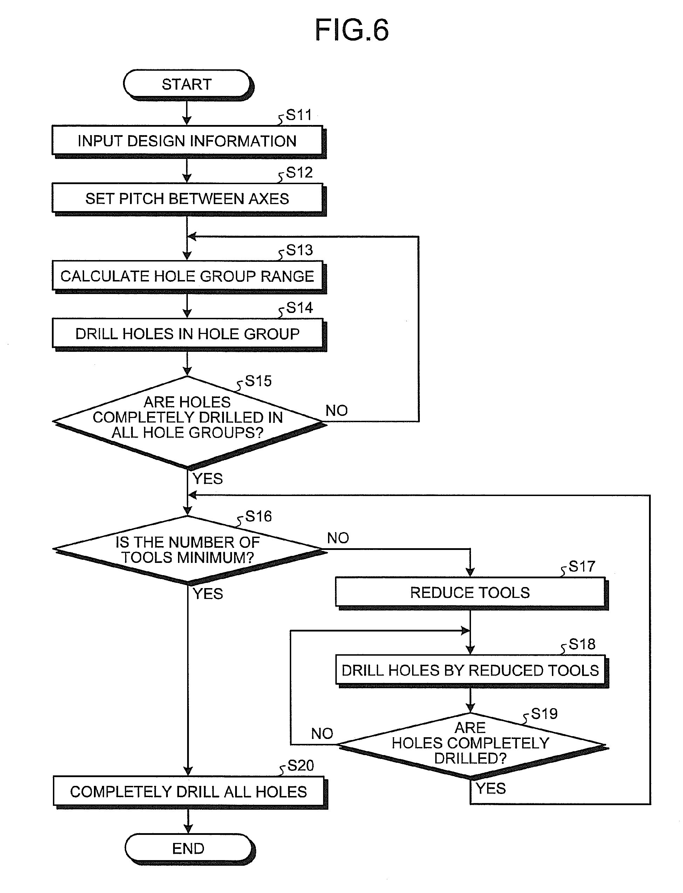

FIG. 6 is a flowchart illustrating the hole drilling method of the first embodiment.

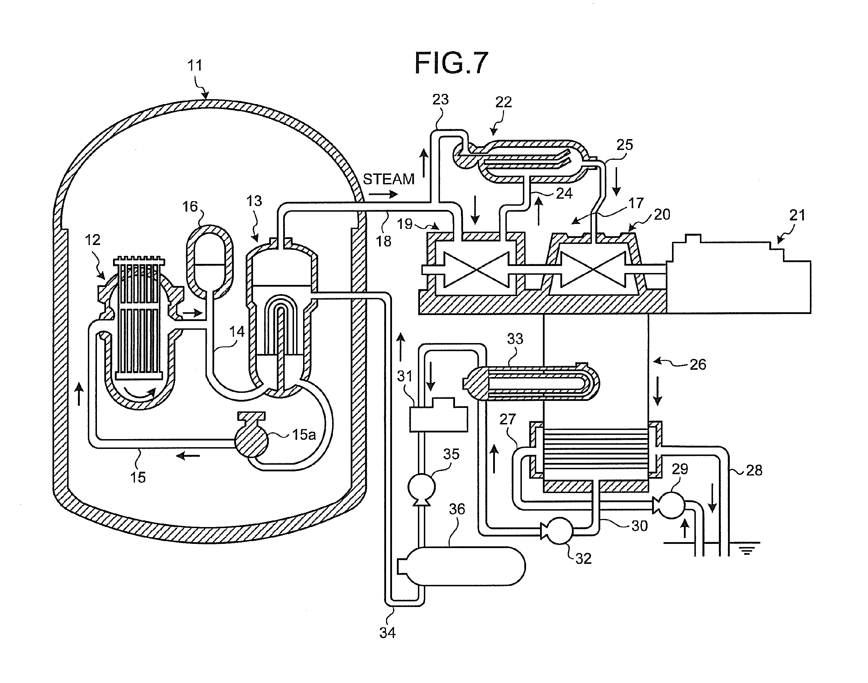

FIG. 7 is a schematic view illustrating the structure of a nuclear power plant to which a steam generator of the first embodiment is applied.

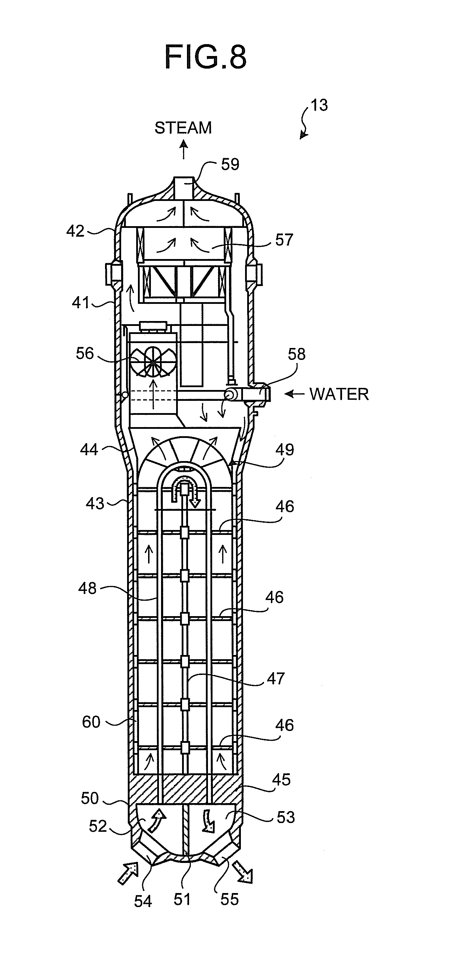

FIG. 8 is a schematic view illustrating the structure of the steam generator of the first embodiment.

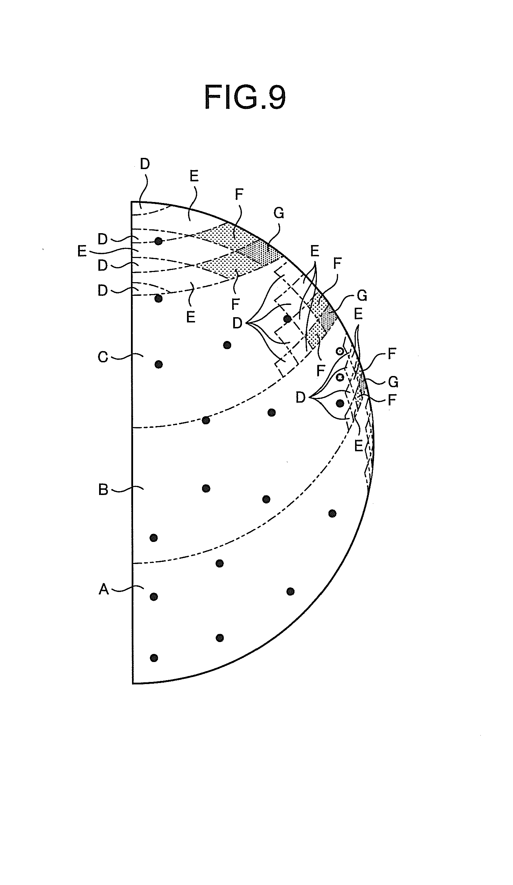

FIG. 9 is a schematic view illustrating the state of a tube sheet that is formed by a hole drilling method according to a second embodiment of the invention.

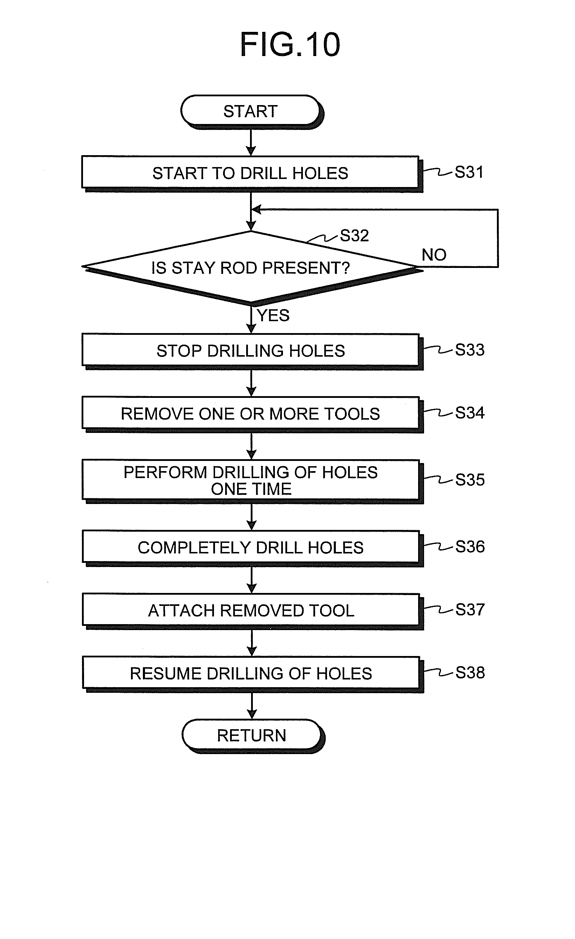

FIG. 10 is a flowchart illustrating the hole drilling method of the second embodiment.

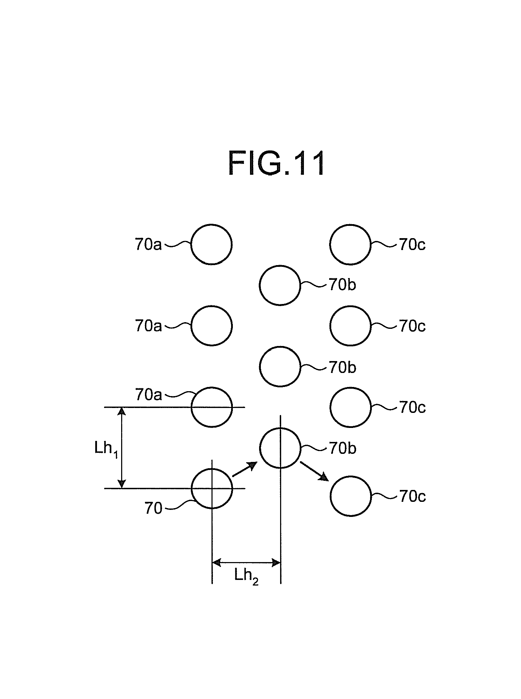

FIG. 11 is a schematic view illustrating the state of a tube sheet that is formed by a hole drilling method according to a third embodiment of the invention. Description of Embodiments

Preferred embodiments of a hole drilling device of the invention will be described in detail below with reference to accompanying drawings. Meanwhile, the invention is not limited to this embodiment, and includes the combinations of embodiments when a plurality of embodiments are provided.

### First embodiment

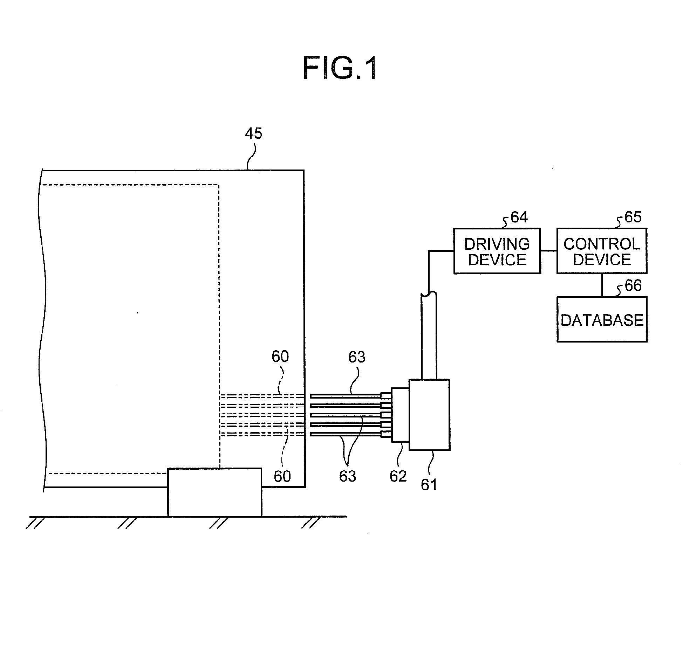

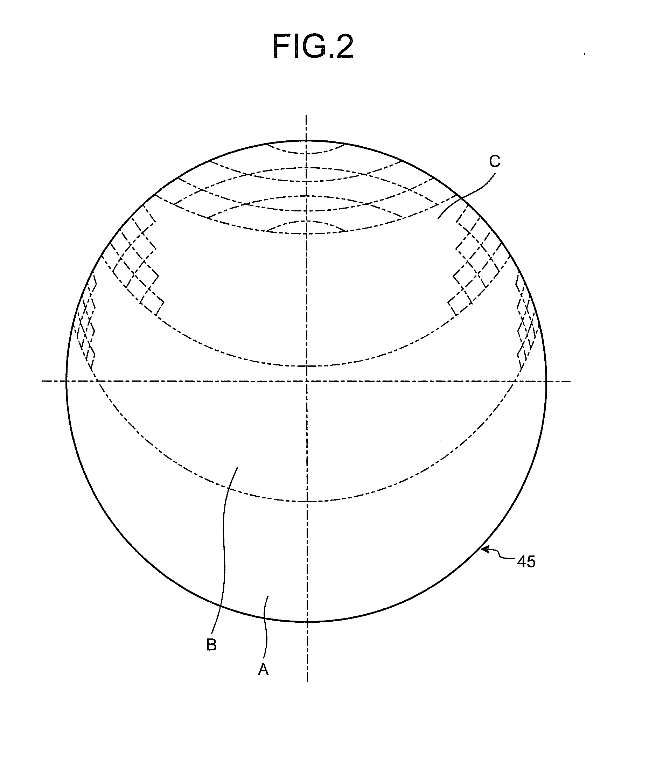

FIG. 1 is a front view illustrating a hole drilling device according to a first embodiment of the invention, FIG. 2 is a schematic view illustrating regions that are divided by a hole drilling method of the first embodiment, FIGS. 3-1 to 3-4 are schematic views illustrating a procedure of the hole drilling method of the first embodiment, FIGS. 4-1 to 4-4 are schematic views illustrating a procedure of another hole drilling method of the first embodiment, FIG. 5 is a schematic view illustrating the state of a tube sheet that is formed by the hole drilling method of the first embodiment, FIG. 6 is a flowchart illustrating the hole drilling method of the first embodiment, FIG. 7 is a schematic view illustrating the structure of a nuclear power plant to which a steam generator of the first embodiment is applied, and FIG. 8 is a schematic view illustrating the structure of the steam generator of the first embodiment.

A nuclear reactor of the first embodiment is a pressurized water reactor (PWR) that forms high temperature and pressure water not boiling over the entire reactor core by using light water as both a nuclear reactor cooling material and a neutron moderator, sends this high temperature and pressure water to a steam generator to generate steam by heat exchange, and sends this steam to a turbine generator to generate electricity.

In the nuclear power plant including the pressurized water reactor of this embodiment, as illustrated in FIG. 7, the pressurized water reactor 12 and the steam generator 13 are contained in a nuclear reactor containment 11, the pressurized water reactor 12 and the steam generator 13 are connected to each other by cooling water pipes 14 and 15, a pressurizer 16 is provided on the cooling water pipe 14, and a cooling water pump 15a is provided on the cooling water pipe 15. In this case, light water is used as both a moderator and primary cooling water (cooling material), and a primary cooling system is controlled so that a high pressure state of about 150 to 160 atmospheres is maintained by the pressurizer 16, in order to suppress the boiling of primary cooling water at a reactor core portion. Accordingly, in the pressurized water reactor 12, light water as the primary cooling water is heated by slightly enriched uranium or MOX as fuel (nuclear fuel) and the high-temperature primary cooling water is sent to the steam generator 13 through the cooling water pipe 14 while being maintained at a predetermined high pressure by the pressurizer 16. In this steam generator 13, heat is exchanged between the high temperature and pressure primary cooling water and secondary cooling water and the cooled primary cooling water is returned to the pressurized water reactor 12 through the cooling water pipe 15.

The steam generator 13 is connected to a steam turbine 17 by a cooling water pipe 18, the steam turbine 17 includes a high-pressure turbine 19 and a low-pressure turbine 20, and a generator 21 is connected to the steam turbine 17. Further, a moisture separation heater 22 is provided between the high-pressure turbine 19 and the low-pressure turbine 20, a cooling water branch pipe 23 branched from the cooling water pipe 18 is connected to the moisture separation heater 22, the high-pressure turbine 19 and the moisture separation heater 22 are connected to each other by a low-temperature reheat pipe 24, and the moisture separation heater 22 and the low-pressure turbine 20 are connected to each other by a high-temperature reheat pipe 25.

Further, the low-pressure turbine 20 of the steam turbine 17 includes a condenser 26, and an intake pipe 27 and a drain pipe 28 through which cooling water (for example, seawater) is supply and discharge are connected to the condenser 26. The intake pipe 27 is provided with a water circulating pump 29 and the other end of the intake pipe 27 is disposed in the sea together with the drain pipe 28. Furthermore, the condenser 26 is connected to a deaerator 31 by a cooling water pipe 30, and the cooling water pipe 30 is provided with a condensate pump 32 and a low-pressure water supply heater 33. Moreover, the deaerator 31 is connected to the steam generator 13 by a cooling water pipe 34, and the cooling water pipe 34 is provided with a water supply pump 35 and a high-pressure water supply heater 36.

Accordingly, steam, which is generated in the steam generator 13 by heat exchange with the high temperature and pressure primary cooling water, is sent to the steam turbine 17 (the low-pressure turbine 20 from the high-pressure turbine 19) through the cooling water pipe 18, and the steam turbine 17 is driven by this steam. As a result, electricity is generated by the generator 21. At this time, after steam generated from the steam generator 13 drives the high-pressure turbine 19, moisture contained in the steam is removed by the moisture separation heater 22 and the steam is heated by the moisture separation heater 22 and drives the low-pressure turbine 20. Further, the steam having driven the steam turbine 17 is changed into condensate by being cooled using seawater in the condenser 26; the condensate is heated in the low-pressure water supply heater 33 by low-pressure steam that is extracted from, for example, the low-pressure turbine 20; and impurities, such as dissolved oxygen or noncondensable gas (ammonia gas), are removed from the condensate by the deaerator 31. Then, after the condensate is heated in the high-pressure water supply heater 36 by high-pressure steam that is extracted from, for example, the high-pressure turbine 19, the condensate is returned to the steam generator 13.

A body 41 of the steam generator 13, which is applied to the nuclear power plant having the above-mentioned structure, has the shape of a closed hollow cylinder and the diameter of a lower portion of the body is slightly smaller than that of an upper portion of the body as illustrated in FIG. 8. This body 41 includes an upper body 42 and a lower body 43 that are joined to each other by welding. A tube group outer cylinder 44, which has a cylindrical shape, is provided in the lower body 43 of the body 41 at a predetermined gap from the inner wall surface of the lower body 43, and the lower end portion of the tube group outer cylinder 44 extends to the vicinity of a tube sheet 45.

A plurality of tube supporting plates 46 are provided in the tube group outer cylinder 44 so as to correspond to predetermined heights, and are supported by a plurality of stay rods 47 that extend upward from the tube sheet 45. Further, a heat transfer tube group 49, which is formed of a plurality of heat transfer tubes 48 having an inverted U shape, is provided in the tube group outer cylinder 44. End portions of the respective heat transfer tubes 48 expand and are supported by the tube sheet 45, and middle portions of the respective heat transfer tubes 48 are supported by the plurality of tube supporting plates 46. In this case, since a plurality of through holes (not illustrated) are formed in the tube supporting plates 46, the respective heat transfer tubes 48 are inserted into the through holes and supported.

A water chamber 50 is fixed to the lower end portion of the lower body 43, the inner space of the water chamber 50 is divided into an intake chamber 52 and a discharge chamber 53 by a partition wall 51, an inlet nozzle 54 and an outlet nozzle 55 are formed at the water chamber 50, and one end portions of the respective heat transfer tubes 48 communicate with the intake chamber 52 and the other end portions thereof communicate with the discharge chamber 53. Meanwhile, the above-mentioned cooling water pipe 14 is connected to the inlet nozzle 54, and the cooling water pipe 15 is connected to the outlet nozzle 54.

The upper body 42 is provided with a steam-water separator 56 that separates water supplied to the inside thereof into steam and hot water and a moisture separator 57 that makes the separated steam be close to dry steam by removing moisture of the separated steam. Further, the upper body 42 includes a water supply tube 58 through which secondary cooling water is supplied into the body 41 and which is inserted between the heat transfer tube group 49 and the steam-water separator 56. A steam outlet 59 is formed at the ceiling of the upper body 42. Furthermore, the body 41 is provided with a water supply passage 60. The water supply passage 60 allows the secondary cooling water, which is supplied into the body 41 from the water supply tube 58, to flow downward between the body 41 and the tube group outer cylinder 44; allows the secondary cooling water to circulate upward at the tube sheet 45; and exchanges heat between the secondary cooling water and hot water (primary cooling water) flowing in the respective heat transfer tubes 48 when the secondary cooling water flows upward in the heat transfer tube group 49. Meanwhile, the above-mentioned cooling water pipe 34 is connected to the water supply tube 58 and the cooling water pipe 18 is connected to the steam outlet 59.

Accordingly, the primary cooling water heated by the pressurized water reactor 12 is sent to the intake chamber 52 of the steam generator 13 through the cooling water pipe 14, circulates through the plurality of heat transfer tubes 48, and reaches the discharge chamber 53. Meanwhile, the secondary cooling water cooled by the condenser 26 is sent to the water supply tube 58 of the steam generator 13 through the cooling water pipe 34, and heat is exchanged between the secondary cooling water and the hot water (primary cooling water), which flows in the heat transfer tubes 48, through the water supply passage 60 of the body 41. In other words, the primary cooling water, which is cooled by heat exchange between the high temperature and pressure primary cooling water and the secondary cooling water in the body 41, is returned to the pressurized water reactor 12 from the discharge chamber 53 through the cooling water pipe 15. Meanwhile, the secondary cooling water, which has exchanged heat with the high temperature and pressure primary cooling water, flows upward in the body 41, is separated into steam and hot water by the steam-water separator 56, and is sent to the steam turbine 17 through the cooling water pipe 18 after moisture of the steam is removed by the moisture separator 57.

In the steam generator 13 having this structure, the plurality of tube supporting plates 46 are provided in the lower portion of the body 41 at a predetermined interval and the tube sheet 45 is provided at the lower end portion of the body 41. Further, the end portions of the plurality of heat transfer tubes 48, which form the heat transfer tube group 49, are fixed to a plurality of attachment holes formed on the tube sheet 45, and the middle portions thereof are supported by a plurality of through holes formed in the respective tube supporting plates 46. Furthermore, the plurality of tube supporting plates 46 are supported by the plurality of stay rods 47 that extend upward from the tube sheet 45. As described above, the tube sheet 45 is provided with not only the attachment holes to which the heat transfer tubes 48 are fixed but also screw holes into which the stay rods 47 are screwed and mounted. Moreover, the tube supporting plates 46 are also provided with not only through holes through which the heat transfer tubes 48 pass but also support holes into which the stay rods 47 are inserted and supported.

For this reason, since the tube sheet 45 is provided with the plurality of attachment holes and screw holes and the tube supporting plates 46 are provided with the plurality of through holes and support holes, it is necessary to effectively drill holes. Further, since the tube sheet 45 and the tube supporting plates 46 are provided with holes having different shapes, it is necessary to drill holes in consideration of this.

Accordingly, as illustrated in FIG. 1, a hole drilling device of the first embodiment includes a drilling head 61, a plurality of (five in this embodiment) hole drilling tools 63 that are detachably attached to the drilling head 61 by a main shaft (or a spindle) 62, a driving device 64 that allows the drilling head 61 to move in the radial direction and axial direction of attachment holes 60 to be formed on the tube sheet 45 as a member to be drilled, a control device 65 that drives the driving device 64, and a database 66 in which drilling data of the tube sheet 45 is stored.

Further, the drilling head 61 includes the hole drilling tools 63 that are provided along the arrangement direction of the attachment holes 60 at a regular interval corresponding to an integer multiple equal to or greater than double the pitch of the attachment holes 60. Furthermore, the control device 65 drives the driving device 64 so that the drilling head 61 moves with respect to each pitch of the attachment holes 60 in the arrangement direction of the hole drilling tools 63 and drills holes by the hole drilling tools 63.

Moreover, the control device 65 drives the driving device 64 so that the drilling head 61 is moved in the direction orthogonal to the arrangement direction of the hole drilling tools 63 by the pitch of the attachment holes 60 and holes are drilled in an adjacent group of one line by the hole drilling tools 63 after the drilling head 61 is moved by a distance corresponding to a group of one line obtained from the multiplication of the pitch of the attachment holes 60, the integer multiple, and the number of the hole drilling tools 63 and holes are completely drilled by the hole drilling tools 63.

Further, the control device 65 drives the driving device 64 so that the drilling head is moved to the next drilling position without drilling holes by all the hole drilling tools 63 when at least one of the plurality of hole drilling tools 63 reaches a drilling-unnecessary position.

Furthermore, when a member to be drilled is a tube sheet 45 having the shape of a disc, the control device 65 drives the driving device 64 so that the drilling head 61 is moved in the outer circumferential direction of the tube sheet 45 and drills holes by the hole drilling tools 63 with a group of one line of the attachment holes 60 along the radial direction of the tube sheet 45 as a unit. Moreover, the control device 65 drives the driving device 64 so that holes are drilled with the reduction in the number of the hole drilling tools 63 after holes are drilled by a predetermined number of hole drilling tools 63.

In other words, regions A, B, C, ... where the attachment holes 60 are to be formed are divided on the tube sheet 45 as illustrated in FIG. 2, and the control device 65 drives the driving device 64 so that the drilling head 61 is moved in the region A to the right side from the center of the region A in the circumferential direction and drills holes by the hole drilling tools 63 first and is subsequently moved to the left side from the center of the region A in the circumferential direction and drills holes by the hole drilling tools 63. After that, the control device 65 drives the driving device 64 so that the drilling head 61 is moved in the region B to the right side from the center of the region B in the circumferential direction and drills holes by the hole drilling tools 63 and is subsequently moved to the left side from the center of the region B in the circumferential direction and drills holes by the hole drilling tools 63. Further, the control device 65 drives the driving device 64 so that the drilling head 61 is moved in the region C to the right side from the center of the region C in the circumferential direction and drills holes by the hole drilling tools 63 and is subsequently moved to the left side from the center of the region C in the circumferential direction and drills holes by the hole drilling tools 63.

In this case, the regions where the drilling head 61 may drill the attachment holes 60 by the five hole drilling tools 63 are denoted by A, B, and C. After holes are completely drilled in the regions A, B, and C, one hole drilling tool 63 is removed from the drilling head 61 and holes are drilled in the regions where the attachment holes 60 may be drilled by the four hole drilling tools 63. Moreover, after holes are completely drilled by the four hole drilling tools 63, one hole drilling tool 63 is further removed from the drilling head 61 and holes are drilled in the regions where the attachment holes 60 may be drilled by the three hole drilling tools 63. The number of the hole drilling tools 63 is reduced from the drilling head 61 in this way and holes are drilled.

A hole drilling method of drilling the attachment holes 60 on the tube sheet 45 by the hole drilling device of the first embodiment will be described in detail below with reference to FIGS. 3-1 to 6.

As illustrated in FIG. 6, in step S11 of the hole drilling method of the first embodiment, the control device 65 reads and receives design information of the tube sheet 45 from the database 66. Here, the design information of the tube sheet 45 includes the number of the attachment holes 60 (the number of all the holes) formed on the tube sheet 45, the pitch Lh of all the attachment holes 60, the number of vertical lines formed of all the attachment holes 60, the number of the attachment holes 60 included in the vertical lines, and the position of the screw hole for the stay rod 47 (drilling-unnecessary position).

In step S12, the control device 65 sets a pitch Ls between axes. In other words, the integer multiple is set to five in consideration of the pitch Lh of the attachment holes 60 and the shapes and sizes of the drilling head 61 and the hole drilling tool 63. Accordingly, it is possible to calculate the pitch Ls between axes (5Lh) from the multiplication of the pitch Lh of the attachment holes 60 and the integer multiple that is five.

In step S13, the control device 65 calculates a hole group range Lg. That is, if the number of the hole drilling tools 63 attached to the drilling head 61 is set to five, it is possible to calculate the hole group range Lg from the multiplication of the pitch Ls between axes and the number of the hole drilling tools 63 that is five. After the pitch Ls between axes and the hole group range Lg are set in this way, the positions of the five hole drilling tools 63 attached to the drilling head 61 are adjusted in step S14 so that an interval of the five hole drilling tools 63 is set to the pitch Ls between axes. After that, the drilling head 61 is moved in this set state to start an operation for drilling the attachment holes 60 on the tube sheet 45.

First, as illustrated in FIG. 2, holes are drilled in a group of a vertical line, which is positioned at a vertical center, in the region A of the tube sheet 45. As illustrated in FIG. 3-1, as for a group Lg of the vertical line positioned at a vertical center in the region A of the tube sheet 45, first, the control device 65 drives the driving device 64 and moves the drilling head 61 to a predetermined position so that five attachment holes 60a-11, 60a-21 ... 60a-51 are drilled by the five hole drilling tools 63. In this case, the five attachment holes 60a-11, 60a-21 ... 60a-51 are positioned on a straight line and form the pitch Ls between axes.

After that, as illustrated in FIG. 3-2, the control device 65 drives the driving device 64 and moves the drilling head 61 to a predetermined position, that is, moves the drilling head 61 upward by the pitch Lh of the attachment holes 60. Here, five attachment holes 60a-12, 60a-22 ... 60a-52 are drilled by the five hole drilling tools 63. It is possible to drill twenty five attachment holes 60a-11, 60a-12 ... 60a-15, 60a-21 ... 60a-55 that are successively positioned on a vertical straight line at a regular interval of the pitch Lh as illustrated in FIG. 3-3 by performing this processing five times.

Further, after the attachment holes 60 are completely drilled in the hole group range Lg of a vertical line, the control device 65 drives the driving device 64, moves the drilling head 61 to the right side by the pitch Lh, and drills holes at this position in the same way as described above. That is, as illustrated in FIG. 3-4, five attachment holes 60b-11, 60b-21 ... 60b-51, which are positioned on the right side of the five attachment holes 60a-11, 60a-21 ... 60a-51 having already been formed and are adjacent to the five attachment holes 60a-11, 60a-21 ... 60a-51 having already been formed, are drilled first. Then, the attachment holes 60 are drilled in the same way as described above.

Furthermore, a drilling-unnecessary position, which corresponds to the position of the screw hole for the stay rod 47, is set on the tube sheet 45. Accordingly, a case where a drilling-unnecessary position is present while the attachment holes 60 are drilled will be described. Here, as illustrated in FIG. 4-1, a screw hole 47a for the stay rod 47 is set at the drilling position of the attachment hole 60a-24. The control device 65 drives the driving device 64 and moves the drilling head 61 to a predetermined position so that five attachment holes 60a-11, 60a-21 ... 60a-51 are drilled by the five hole drilling tools 63.

After that, as illustrated in FIG. 4-2, the control device 65 drives the driving device 64 and moves the drilling head 61 to a predetermined position, that is, moves the drilling head 61 upward by the pitch Lh of the attachment holes 60. Here, five attachment holes 60a-12, 60a-22 ... 60a-52 are drilled by the five hole drilling tools 63. Further, after the attachment holes 60a-11, 60a-12, 60a-13, 60a-21 ... 60a-53 are completely drilled by this processing, the driving device 64 then moves the drilling head 61 to positions where the five hole drilling tools 63 drill five attachment holes 60a-14, 60a-24 ... 60a-54. However, here, since the screw hole 47a for the stay rod 47 is set at the drilling position of the attachment hole 60a-24 as illustrated in FIG. 4-3, the drilling head 61 is moved to the next drilling position without drilling five attachment holes 60a-14, 60a-24 ... 60a-54 by the hole drilling tools 63. That is, the drilling head 61 is moved to a position where the hole drilling tools 63 drill five attachment holes 60a-15, 60a-25 ... 60a-55.

Further, after the attachment holes 60 are completely drilled in the hole group range Lg of a vertical line, it is possible to drill twenty attachment holes 60a-11, 60a-12, 60a-13, 60a-15, 60a-21 ... 60a-55 except for four attachment holes 60a-24, 60a-34, 60a-44, 60a-54 and the screw hole 47a (60a-24). After that, the control device 65 drives the driving device 64, moves the drilling head 61 to the right side by the pitch Lh, and drills holes at this position in the same way as described above. That is, as illustrated in FIG. 4-4, five attachment holes 60b-11, 60b-21 ... 60b-51, which are positioned on the right side of the five attachment holes 60a-11, 60a-21 ... 60a-51 having already been formed and are adjacent to the five attachment holes 60a-11, 60a-21 ... 60a-51 having already been formed, are drilled first. Then, the attachment holes 60 are drilled in the same way as described above.

Returning to the flowchart of FIG. 6, in step S15, the control device 65 determines whether or not holes are completely drilled in all the hole group regions A to C. That is, after holes are completely drilled in the hole group region A, the control device 65 performs the same processing in the hole group region B. After holes are completely drilled in the hole group region B, the control device 65 performs the same processing in the hole group region C. Further, when holes are completely drilled in all the hole group regions A to C, an operation for drilling holes in the regions A to C except for regions D to G is completed as illustrated in FIG. 5.

Furthermore, in step S16, it is determined whether or not the number of the hole drilling tools 63 attached to the drilling head 61 is minimum. First, since the five hole drilling tools 63 are attached to the drilling head 61 and drill holes, a procedure proceeds to step S17 at this time and one hole drilling tool 63 attached to the drilling head 61 is removed and reduced. In this case, one hole drilling tool 63, which is attached to an end of one line, is removed. Further, in step S18, holes are drilled while four hole drilling tools 63 are attached to the drilling head 61. In this case, holes are drilled in the hole group region D illustrated in FIG. 5. After holes are completely drilled in the hole group region D, it is determined in step S19 whether or not all holes are completely drilled. If all holes are not yet completely drilled, the procedure returns to step S16. The drilling of holes in step S18 is substantially the same as the processing of the above-mentioned step S14.

It is possible to drill all the attachment holes 60 in the tube sheet 45 by repeating the processing of steps S16 to S19 in this way, and to completely drill all the holes in step S20. Meanwhile, holes are drilled in the hole group region D by the drilling head 61 to which four hole drilling tools 63 are attached, holes are drilled in the hole group region E by the drilling head 61 to which three hole drilling tools 63 are attached, holes are drilled in the hole group region F by the drilling head 61 to which two hole drilling tools 63 are attached, and holes are drilled in the hole group region G by the drilling head 61 to which one hole drilling tool 63 is attached.

As described above, the hole drilling device of the first embodiment includes the drilling head 61, the plurality of hole drilling tools 63 that are detachably attached to the drilling head 61, the driving device 64 that allows the drilling head 61 to move in the radial direction and axial direction of the attachment holes 60 to be formed on the tube sheet 45, and the control device 65 that drives the driving device 64; the hole drilling tools 63 are disposed on the drilling head 61 in the arrangement direction of the attachment holes 60 at a regular interval that corresponds to an integer multiple equal to or greater than double the pitch of the attachment holes 60; and the control device 65 drives the driving device 64 so that the drilling head 61 moves with respect to each pitch of the attachment holes 60 in the arrangement direction of the hole drilling tools 63 and drills holes by the hole drilling tools 63.

Accordingly, five hole drilling tools 63 are attached to the drilling head 61, and the drilling head 61 moves with respect to each pitch of the attachment holes 60 formed in the arrangement direction of the hole drilling tools 63 and can simultaneously drill a plurality of holes by the hole drilling tools 63. Therefore, it is possible to simultaneously drill a plurality of attachment holes 60 at once. As a result, it is possible to improve the performance of the drilling operation.

Further, in the hole drilling device of the first embodiment, the control device 65 drives the driving device 64 so that the drilling head 61 is moved in the direction orthogonal to the arrangement direction of the hole drilling tools 63 by the pitch of the attachment holes 60 and holes are drilled in an adjacent group of one line by the hole drilling tools 63 after the drilling head 61 is moved by a distance corresponding to a group of one line obtained from the multiplication of the pitch of the attachment holes 60, the integer multiple, and the number of the hole drilling tools 63 and holes are completely drilled by the hole drilling tools 63. Accordingly, the plurality of hole drilling tools 63 can be attached to the drilling head 61 and the plurality of hole drilling tools 63 are moved so that holes are drilled with a group of one line as a unit. Therefore, it is possible to easily drill a plurality of attachment holes 60 in a short time.

Further, in the hole drilling device of the first embodiment, the control device 65 drives the driving device 64 so that the drilling head is moved to the next drilling position without drilling holes by all the hole drilling tools 63 when at least one of the plurality of hole drilling tools 63 reaches the drilling-unnecessary position. Accordingly, it is possible to perform a continuous drilling operation without stopping a machine by drilling the attachment hole 60, which is positioned at the drilling position set to a drilling-unnecessary position, later.

Furthermore, in the hole drilling device of the first embodiment, the control device 65 drives the driving device 64 so that holes are drilled with the reduction in the number of the hole drilling tools 63 after holes are drilled by a predetermined number of hole drilling tools 63. Accordingly, it is possible to efficiently drill holes by sequentially performing processing in the regions where holes can be drilled with the number of the hole drilling tools 63 and then drilling holes with the reduction in the number of the hole drilling tools 63.

Moreover, when holes are drilled on the tube sheet 45 having the shape of a disc by the hole drilling tools 63 in the hole drilling device of the first embodiment, the control device 65 drives the driving device 64 so that the drilling head 61 is moved in the circumferential direction of the tube sheet 45 and drills holes by the hole drilling tools 63 with a group of one line of the attachment holes 60 along the radial direction of the tube sheet 45 as a unit. Accordingly, since the drilling head 61 is moved in the circumferential direction and drills holes with a group of one line of the attachment holes 60 along the radial direction of the tube sheet 45 as a unit, it is possible to simultaneously drill a plurality of attachment holes 60 at once even in the case of the tube sheet 45 having the shape of a disc. As a result, it is possible to improve the performance of the drilling operation.

### Second embodiment

FIG. 9 is a schematic view illustrating the state of a tube sheet that is formed by a hole drilling method according to a second embodiment of the invention, and FIG. 10 is a flowchart illustrating the hole drilling method of the second embodiment. Meanwhile, the basic structure of a hole drilling device of this embodiment is substantially the same as that of the above-mentioned first embodiment, and will be described with reference to FIG. 1. Members having the same functions as those of the above-mentioned embodiment are denoted by the same reference signs, and the detailed description thereof will not be repeated.

As illustrated in FIG. 1, a hole drilling device of the second embodiment includes a drilling head 61, a plurality of (five in this embodiment) hole drilling tools 63 that are detachably attached to the drilling head 61 by a mount 62, a driving device 64 that allows the drilling head 61 to move in the radial direction and axial direction of attachment holes 60 to be formed on a tube sheet 45 as a member to be drilled, a control device 65 that drives the driving device 64, and a database 66 in which drilling data of the tube sheet 45 is stored.

Further, the drilling head 61 includes hole drilling tools 63 that are provided along the arrangement direction of the attachment holes 60 at a regular interval corresponding to an integer multiple equal to or greater than double the pitch of the attachment holes 60. Furthermore, the control device 65 drives the driving device 64 so that the drilling head 61 moves with respect to each pitch of the attachment holes 60 in the arrangement direction of the hole drilling tools 63 and drills holes by the hole drilling tools 63.

Moreover, the control device 65 drives the driving device 64 so that holes are drilled after the hole drilling tool 63 positioned at a drilling-unnecessary position is removed when any one of the plurality of hole drilling tools 63 reaches the drilling-unnecessary position.

A hole drilling method, which uses the hole drilling device of the second embodiment, will be described below. However, since the second embodiment is different from the first embodiment in terms of only step S14 of the first embodiment and other processing are the same, only the different processing will be described.

In a hole drilling method of the second embodiment, after the control device 65 reads and receives design information of the tube sheet 45 from the database 66, sets a pitch Ls between axes, and calculates a hole group range Lg, the positions of the five hole drilling tools 63 attached to the drilling head 61 are adjusted so that an interval of the five hole drilling tools 63 is set to the pitch Ls between axes. Then, the drilling head 61 is moved in this set state to start an operation for drilling the attachment holes 60 on the tube sheet 45.

That is, as illustrated in FIG. 10, when the drilling of the attachment holes 60 is started in step S31, in step S32, it is determined at the position where the drilling head 61 stops whether or not the position of a screw hole for the stay rod 47 (drilling-unnecessary position) is present at the positions where the five hole drilling tools 63 drill holes. Here, if the position of the screw hole for the stay rod 47 (drilling-unnecessary position) is not present at the positions where the five hole drilling tools 63 drill holes, a drilling operation is continued as in the first embodiment.

Meanwhile, here, if the position of the screw hole for the stay rod 47 (drilling-unnecessary position) is present at the positions where the five hole drilling tools 63 drill holes, the control device 65 stops the movement of the drilling head 61 by the driving device 64 in step S33 and outputs an alarm. This alarm is sound or a lamp. In step S34, the control device 65 operates a tool attaching/detaching device (not illustrated) to remove a hole drilling tool 63 that corresponds to the position of the screw hole for the stay rod 47. In this case, the number of the removed hole drilling tools 63 is not limited to one and may be two or more. Further, in step S35, the control device 65 moves the drilling head 61 by the driving device 64 and performs the drilling of holes one time by the remaining hole drilling tools 63. Here, the attachment holes 60 are drilled by the hole drilling tools 63 at the drilling positions except for the position corresponding to the position of the screw hole for the stay rod 47.

After holes are completely drilled in step S36 by the hole drilling tools 63 from which a predetermined hole drilling tool 63 has been removed, the control device 65 operates the tool attaching/detaching device in step S37 to attach the removed hole drilling tool 63 so that the number of the hole drilling tools 63 becomes the original number. Further, a normal drilling operation is resumed in step S38.

Meanwhile, when holes are completely drilled in the hole group regions A to C of the tube sheet 45, the control device 65 completes a drilling operation in the regions A to C except for the regions D to G as illustrated in FIG. 9. In this case, the region G is not present in the regions A to C.

In this way, in the hole drilling device of the second embodiment, the control device 65 drives the driving device 64 so that holes are drilled after the hole drilling tool 63 positioned at the drilling-unnecessary position is removed when any one of the plurality of hole drilling tools 63 reaches the drilling-unnecessary position.

Accordingly, since holes are drilled after the hole drilling tool 63 positioned at the drilling-unnecessary position is removed, the drilling of holes is sequentially performed at the drilling positions except for the drilling-unnecessary position. Therefore, it is possible to efficiently perform a drilling operation.

### Third embodiment

FIG. 11 is a schematic view illustrating the state of a tube sheet that is formed by a hole drilling method according to a third embodiment of the invention. Meanwhile, the basic structure of a hole drilling device of this embodiment is substantially the same as that of the above-mentioned first embodiment, and will be described with reference to FIG. 1. Members having the same functions as those of the above-mentioned embodiment are denoted by the same reference signs, and the detailed description thereof will not be repeated.

The attachment holes 60 of the tube sheet 45, which have been described in the above-mentioned first and second embodiments, are arranged in a square shape, and the pitch of the attachment holes 60 in the vertical direction and the pitch of the attachment holes 60 in the horizontal direction are set to the same dimension. Meanwhile, as illustrated in FIG. 11, attachment holes 70 (70a, 70b, 70c ...) of a tube sheet 45 to be described in the third embodiment are arranged in a triangular shape and the pitch Lh₁ of the attachment holes 70 in the vertical direction and the pitch Lh₂ of the attachment holes 70 in the horizontal direction are set to different dimensions.

In this case, as illustrated in FIGS. 1 and 11, the control device 65 drives the driving device 64 so that the drilling head 61 is moved upward in the arrangement direction of the hole drilling tools 63 by 1/2 of the pitch Lh₁ of the attachment holes 70a in the vertical direction, the drilling head 61 is moved in the direction orthogonal to the arrangement direction of the hole drilling tools 63 by the pitch Lh₂ of the attachment holes 70a and 70b in the horizontal direction, and the attachment holes 70b of an adjacent group of one line are drilled by the hole drilling tools 63 after the drilling head 61 is moved by a distance corresponding to a group of one line obtained from the multiplication of the pitch Lh₁ of the attachment holes 70a in the vertical direction, an integer multiple, and the number of the hole drilling tools 63 and holes are completely drilled by the hole drilling tools 63.

Meanwhile, the number of the hole drilling tools 63 attached to the drilling head 61 has been set to five in the above-mentioned each embodiment, but is not limited to five. Further, the hole drilling tools 63 attached to the drilling head 61 have formed one line, but may form two or more lines. Furthermore, the interval of the plurality of hole drilling tools 63 has been set to be five times larger than the pitch of the attachment holes 60, but is not limited thereto. The interval of the plurality of hole drilling tools 63 may be appropriately set in consideration of the shapes and sizes of the drilling head 61 and the hole drilling tool 63.

Moreover, in the above-mentioned embodiments, the tube sheet 45 has been used as a member to be drilled and the attachment hole 60 has been formed as a hole to be drilled. However, the tube supporting plate 46 may be used as a member to be drilled and a through hole for supporting the heat transfer tube 48 may be formed as a hole to be drilled. Further, the tube supporting plate 46 of the steam generator 13, the tube sheet 45, or the like has been used as a member to be drilled. However, a plurality of holes may have only to be formed in a plate having a predetermined thickness, and the invention may be applied to any field.

### Industrial Applicability

A hole drilling device and a hole drilling method according to the invention can simultaneously drill a plurality of holes at once and improve the performance of a drilling operation by moving a drilling head in the arrangement direction of hole drilling tools with respect to each pitch of holes and drilling holes by the hole drilling tools, and may be applied to any drilling operation.

### Reference Signs List

- 11: NUCLEAR REACTOR CONTAINMENT
- 12: PRESSURIZED WATER REACTOR
- 13: STEAM GENERATOR
- 17: STEAM TURBINE
- 19: HIGH-PRESSURE TURBINE
- 20: LOW-PRESSURE TURBINE
- 21: GENERATOR
- 41: BODY
- 45: TUBE SHEET (MEMBER TO BE DRILLED)
- 46: TUBE SUPPORTING PLATE
- 44: TUBE GROUP OUTER CYLINDER
- 48: HEAT TRANSFER TUBE
- 49: HEAT TRANSFER TUBE GROUP
- 60: ATTACHMENT HOLE
- 61: DRILLING HEAD
- 63: HOLE DRILLING TOOL
- 64: DRIVING DEVICE
- 65: CONTROL DEVICE

## Claims

1. A hole drilling device comprising:
a drilling head;
a driving device that allows the drilling head to move in the radial direction and axial direction of holes to be formed on a member to be drilled;
a plurality of hole drilling tools that are provided on the drilling head along the arrangement direction of the holes at a regular interval corresponding to an integer multiple equal to or greater than double the pitch of the holes; and
a control device that controls the driving device so that the drilling head moves with respect to each pitch of the holes in the arrangement direction of the hole drilling tools and drills holes by the hole drilling tools.

2. The hole drilling device according to claim 1,
wherein the control device drives the driving device so that the drilling head is moved in a direction orthogonal to the arrangement direction of the hole drilling tools by the pitch of the holes and holes are drilled in an adjacent group of one line by the hole drilling tools after the drilling head is moved by a distance corresponding to a group of one line obtained from the multiplication of the pitch of the holes, the integer multiple, and the number of the hole drilling tools and holes are completely drilled by the hole drilling tools.

3. The hole drilling device according to claim 1 or 2,
wherein the control device drives the driving device so that the drilling head is moved to the next drilling position without drilling holes by all the hole drilling tools when at least one of the plurality of hole drilling tools reaches a drilling-unnecessary position.

4. The hole drilling device according to claim 1 or 2,
wherein the control device drives the driving device so that holes are drilled after the hole drilling tool positioned at a drilling-unnecessary position is removed when any one of the plurality of hole drilling tools reaches the drilling-unnecessary position.

5. The hole drilling device according to claim 3 or 4,
wherein the control device drives the driving device so that holes are drilled with a reduced number of hole drilling tools after holes are drilled by a predetermined number of the hole drilling tools.

6. The hole drilling device according to any one of claims 1 to 5,
wherein the member to be drilled has the shape of a disc and holes are drilled on the member to be drilled in an axial direction by the hole drilling tools, and
the control device drives the driving device so that the drilling head is moved in the outer circumferential direction of the member to be drilled and drills holes by the hole drilling tools with a group of one line of the holes along a direction parallel to the radial direction of the member to be drilled as a unit.

7. A hole drilling method of moving a drilling head on which a plurality of hole drilling tools are provided in series at a predetermined interval and drilling holes on a member to be drilled,
wherein the plurality of hole drilling tools are disposed along the arrangement direction of the holes at a regular interval that corresponds to an integer multiple equal to or greater than double the pitch of the holes, and
the drilling head moves with respect to each pitch of the holes in the arrangement direction of the hole drilling tools and drills holes by the hole drilling tools.
